Europäisches Patentamt

European Patent Office

Office européen des brevets

(11) Publication number: **0 169 625**
**B1**

(12) **EUROPEAN PATENT SPECIFICATION**

(45) Date of publication of patent specification: **27.12.90**

(51) Int. Cl.⁵: **H 02 P 1/44, F 04 B 49/08**

(21) Application number: **85300964.5**

(22) Date of filing: **14.02.85**

(54) Electric motor control.

(30) Priority: **20.07.84 US 632955**

(43) Date of publication of application:
**29.01.86 Bulletin 86/05**

(45) Publication of the grant of the patent:
**27.12.90 Bulletin 90/52**

(84) Designated Contracting States:
**DE FR IT**

(56) References cited:
**EP-A-0 027 524**
**US-A-4 166 934**

(73) Proprietor: **FRANKLIN ELECTRIC Co., Inc.**
**400 East Spring Street**
**Bluffton Indiana 46714 (US)**

(72) Inventor: **Schaefer, Edward J.**
**Fackler Road**
**Bluffton Indiana 46714 (US)**

(74) Representative: **Newstead, Michael John et al**
**Page & Co. Temple Gate House Temple Gate**
**Bristol BS1 6PL (GB)**

Courier Press, Leamington Spa, England.

EP 0 169 625 B1

## Description

Electric motor control

This invention relates to a control for an electric motor of a well pump, such as a water well pump, for a rural residence. Conventional well pumps of this nature include an electric motor driven pump installed in the well, the pump being connected by pipes to a water storage tank which in turn is connected to the water distribution system of the residence. A typical prior art pump control includes a pressure switch that is connected to the pipes and responds to the water pressure in the storage tank, and the switch turns the motor on and off to maintain the water pressure in the tank within a preset pressure range. The electric motor is usually a single phase type, and the control further includes a start winding control switch along with, in the case of a capacitor start motor, a capacitor.

In some prior art controls of this nature, it is preferable that the parts of the control be separated. For example, the pressure switch has been at one location and the motor start winding control switch and the capacitor have been at a different location. Another arrangement is shown in the U.S. Patent No. 4,462,758, dated July 31, 1984, wherein the pressure switch and the start winding control switch are fastened together and enclosed by a single housing.

The prior art controls, as described above, have the disadvantage that they are designed either for mounting at different locations or for mounting together.

U.S. Patent No. 4,166,934 discloses a modular electrical switch/outlet assembly in which the switch module is provided with a pair of connector prongs which mates with a wiring box.

According to the present invention there is provided an electric motor control for attachment either to a support wall or to a pressure switch, comprising a terminal base, a plurality of quick connect terminals fastened to said base, and a cover attachable to said base and enclosing said terminals, characterized in that said terminal base has a base portion and a mounting wall portion, said terminals being mounted on said base portion, first and second lead openings formed in said base portion and in said mounting wall portion, respectively, and a motor control switch fastened within said cover, said switch including a plurality of quick connect terminals located to engage said terminals of said base when said cover is assembled with said base. There is thus provided a control wherein parts may be located together or at different locations, as required. The control is rugged and electrical connections are easily performed.

For a better understanding of the invention and to show how the same may be carried into effect, reference will now be made by way of example, to the accompanying drawings, in which:

Fig. 1 is an electrical schematic diagram of a well pump motor system including a control in accordance with the present invention;

Fig. 2 is a plan view of a printed circuit switch board of the control;

Fig. 3 is an end view of the board shown in Fig. 2;

Fig. 4 is a sectional view of a control in accordance with the present invention;

Fig. 5 is a perspective view of the control fastened to a pressure switch;

Fig. 6 is another view of the structure shown in Fig. 5 but with a cover of the control removed; and

Fig. 7 is a view of the control, with the cover removed, fastened to a mounting surface such as a wall.

Detailed description of the drawings

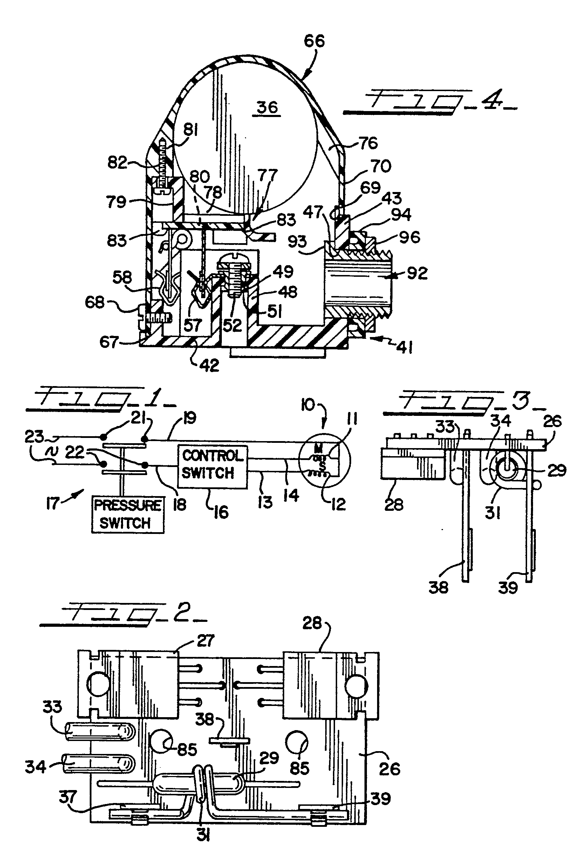

With reference first to Fig. 1, a motor circuit in accordance with this invention includes a single-phase induction motor 10 including a main winding 11 and a start winding 12. The two windings 11 and 12 are connected by two motor leads 13 and 14 to a start winding control switch 16. A pressure switch 17 is connected by one lead 18 to the control switch 16 and by another lead 19 to the motor windings 11 and 12. The pressure switch 17 includes contacts 21 and 22 which are connected to power leads 23, the leads 23 being adapted to be connected to a conventional ac power supply.

The pressure switch 17 may be a conventional type, such as that shown in U.S. Patent No. 3,340,372. The pressure switch is connected to sense the water pressure in a storage tank (not shown) and to close the contacts 21 and 22 when the pressure level is at a preset minimum and to open the contacts when the pressure is at a preset maximum.

The start winding control switch 16 may also be a conventional type, such as the switch shown in the U.S. Patent No. 4,307,327, or in the U.S. Patent No. 4,463,304. In the present instance, the control circuit shown in the US—A—4,463,304 is illustrated in the drawings.

In the operation of the system shown in Fig. 1, the power leads 23 are connected to a power supply and the pressure switch 17 is connected to sense the water pressure. When the pressure drops to a preset low value, the pressure switch contacts close. At startup, the control switch 16 connects the power supply to both the main and start windings 11 and 12. When the speed of the motor is close to the running speed, the switch 16 automatically operates to disconnect the start winding 12. The motor then continues to run on the main winding. The motor is, of course, connected to drive a pump (not shown) which pumps water into the storage tank until the pressure in the tank reaches the upper preset value, at which time the pressure switch 17 automatically operates to open the contacts 21 and 22 and thereby deenergize the motor 10. The foregoing cycle is repeated whenever the water pressure drops.

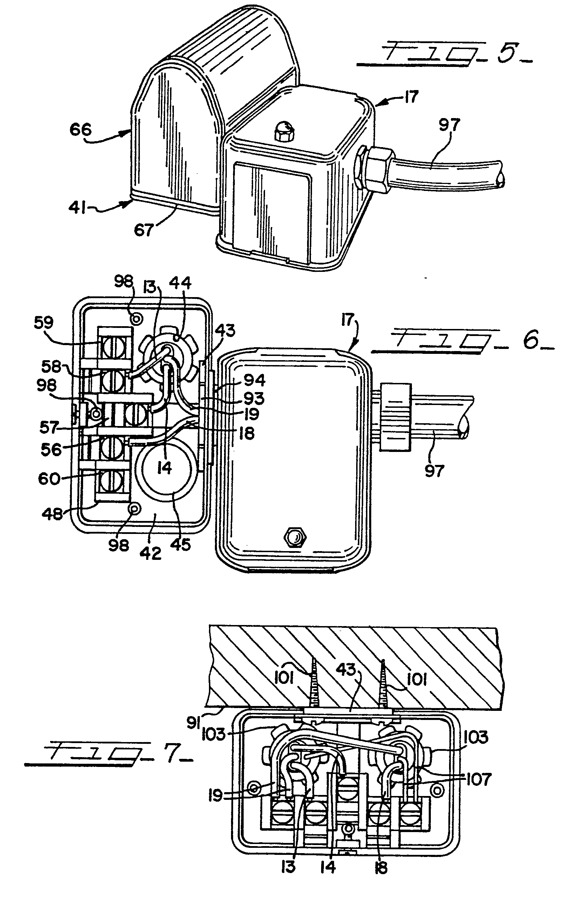

With reference to Figs. 2 and 3, the motor start winding control switch 16 is mounted on a relatively flat, rectangular printed circuit board 26. The control switch includes two triacs 27 and 28, a reed switch 29 and a coil 31 which is wound around the reed switch 29. Two wires 33 and 34 connect the printed circuit board 26 with a start capacitor 36 shown in Fig. 4. As shown and described in the abovementioned US—A—4,463,304, the two triacs 27 and 28, the start winding 12 and the capacitor 36 are connected in series across the power leads. The gates or controls of the two triacs are connected to opposite sides of the reed switch, and the coil 31 is connected in one of the power leads so that the start and main winding currents flow through the coil 31. The disclosure of US—A—4,463,304 is incorporated herein by reference.

The printed circuit board 26 further includes three quick connect terminal prongs 37, 38 and 39, which are also shown in Fig. 3. The two prongs 37 and 39 are connected to opposite ends of the coil 31. As shown in Fig. 4, the prongs 37—39 mate with and connect to receptacle quick connect terminals mounted on a terminal base 41.

With reference to Figs. 4 and 6, the terminal base 41, which may be formed of molded plastic, includes a flat, generally rectangular base wall 42 and an upstanding mounting wall 43 that is at a substantially right angle to the base wall 42. The base wall 42 has two openings 44 and 45 (Fig. 6) formed therein, and the mounting wall 43 has a single hole 47 formed therein. As shown in Fig. 6, the mounting wall 43 does not extend for the entire length of the base wall 42 and it is located, in the present example, at approximately the midpoint of the length of the base wall 42.

The base wall 42 has a plurality of steps or ledges 48 formed on the upper or same side that the mounting wall 43 is located on but adjacent the opposite edge. In the present instance, five ledges 48 are provided, each ledge having a hole 49 formed in its upper surface. An internally threaded clamp rivet 51 is secured in each hole 49. A terminal screw 52 is threaded into each rivet 51 and may be utilized, as shown in Figs. 6 and 7, to secure leads or wires to the terminals.

The three centermost ledges 48 are also provided with receptacle quick connect terminals 56, 57 and 58. As shown in Fig. 4, the three prongs 37, 38 and 39 of the switch board are located to connect with the three receptacle terminals 56, 57 and 58 of the terminal base 41. The two outermost ledges 48 of the terminal base have lead clamps 59 and 60 under the screws 52.

The control further includes a cover 66 (Figs. 4 and 5) which may also be formed of molded plastic. The cover 66 forms an enclosure having an open bottom, and the bottom edge 67 of the cover edge 67 of the cover has a configuration that conforms to the contour of the terminal base 41, as shown in Figs. 4 and 5. When the cover is positioned on the upper side of the terminal base, they may be secured together by a screw 68 that extends through a slot formed in the cover and is threaded into a hole formed in the base 41. The cover 66 has the shape of an inverted U in cross section, and its side 70 which is adjacent the mounting wall 43, has a cutout 69 formed therein which engages the outside edge of the mounting wall 43.

The capacitor 36 is mounted within the upper side of the cover 66, and the upper side of the cover is preferably curved or shaped to conform to the curvature of the cylindrical capacitor 36, as shown in Fig. 4. Ribs 76 are preferably molded on the inside of the cover 66 which serve both to strengthen the cover and to engage and hold the capacitor 36 against movement in the cover.

The capacitor 36 is held in position in the upper side of the cover 66 by a printed circuit board mounting bracket 77 (Fig. 4). The bracket 77 has a right angle shape, one arm 78 of the bracket extending under and engaging the bottom side of the capacitor 36. The second arm 79 of the bracket 77 engages a ledge 81 of the cover and a screw 82 firmly secures the bracket 77 to the inside of the cover 66. On the underside of the bracket 77 are formed a plurality of tabs 83 which engage and hold the edges of the printed circuit board 26. As shown in Fig. 4, the board 26 is located between the tabs 83 and the tabs are flexible so that they may be bent outwardly slightly to permit the board 26 to be mounted in or removed from the cover. Further, the bracket 77 preferably has two rounded protrusions 80 formed on its underside which extend into openings 85 (Fig. 2) formed in the board 26 in order to center or properly mount the board on the bracket. When so mounted, the three prongs 37—39 are located to engage the receptacles 56—58, as previously described, when the cover 66 is moved downwardly relative to the terminal base 41 and tightly engaged with the base, as shown in Fig. 4.

The control is designed to be fastened either directly to the pressure switch 17, as shown in Figs. 5 and 6, or to be mounted against a mounting surface 91, such as a wall, as shown in Fig. 7, at a location which is displaced from the pressure switch 17. In both types of installation, the motor leads 13, 14 and 19 extend through the hole 44 formed in the base wall 42 of the terminal base 41.

With reference first to Figs. 5 and 6, the control is fastened to the pressure switch 17 by a short bushing 92 (Fig. 4) that is positioned through the hole 47 formed in the mounting wall 43. The bushing 92 has an enlarged head or flange 93 which engages the inside surface of the mounting wall 43. An annular spacer 94 is located around the shank of the bushing 92 and engages the outside surface of the mounting wall, and a jam nut 96 is threaded on the outer threaded end of the bushing 92.

The standard pressure switch 17 is provided with two power lead conduit holes, one on each side of the switch as shown in Fig. 6. With the nut 96 removed, the outer threaded end of the bushing 92 is positioned through one of the pressure switch holes and the jam nut 96 is utilized to secure the bushing and the terminal base 41 to the side of the pressure switch. The spacer 94 is located between the terminal base and the pressure switch. The two power leads 23 are connected to the pressure switch 17 through a conduit 97 which is connected to the other hole of the pressure switch. As shown in Fig. 6, the two leads 18 and 19 extend through the bushing 92 and the lead 18 is connected to the terminal 56. One of the prongs 37—39 thus connects with the terminal 56 in order to connect the lead 18 with the start winding control switch on the board 26. The motor leads 13 and 14 are connected to the other two terminals 57 and 58 and, of course, are also connected to the start winding control switch. The lead 19 extends directly from the pressure switch to the motor, as shown in Figs. 1 and 6.

Thus, the terminal base 41 is secured to the side of the pressure switch 17 and the electrical leads, when the cover 66 is removed, may be readily attached to the terminals 56—58 and to the motor and the pressure switch. The cover 66 is then moved downwardly over the top of the terminal base 41 and the electrical connections to the start winding control switch and to the capacitor are automatically made when the quick connect terminals are engaged. The screw 68 is then secured to hold the cover on the base.

A plurality of holes 98 (Fig. 8) are preferably formed through the base wall 42, which are provided to allow drainage of any condensation water from the inside of the control enclosure. In the case of controls which may be mounted at locations where they are exposed to outside moisture, such condensation or moisture may collect, and the holes 98, which are normally at the lowest part of the control, permit the moisture to leak out.

When the control is to be fastened to a mounting surface 91, such as a wall, as shown in Fig. 7, the bushing 92, the spacer 94 and the jam nut 96 are discarded and the mounting wall 43 is positioned against the surface 91. The wall 43 has screw holes formed therein and suitable screw fasteners 101 are employed to firmly secure the wall 43 to the surface 91. The hole 47 in the mounting wall 43 is, of course, blocked by the surface 91, and the electrical leads connecting the terminals with the pressure switch are passed through the hole 45 formed in the base wall 42. The conduit through which the leads extend are secured in place by jam nuts 103. Ground wires 107 are connected to the nearest grounded power line connector. If the control is mounted on the power switch, the ground wires are connected to ground in the pressure switch enclosure; if the control is mounted on a separate supporting surface, the ground wires are connected to the nearest ground.

It will be apparent from the foregoing that the terminal base is adaptable to being mounted either directly on a pressure switch, as shown in Figs. 5 and 6, or on a separate supporting surface as shown in Fig. 7, as required for specific installation. In either arrangement, the connections are readily made to the terminals on the terminal base because the terminals are exposed when the cover is removed, and the electrical connections are automatically made to the start winding control switch when the cover is attached to the base. The capacitor and the start winding control switch may be easily removed for repair or replacement without disturbing the electrical connections to the motor and the pressure switch. The printed circuit mounting bracket both supports the printed circuit board and it also holds the capacitor in place. Further, the components on the printed circuit board are held away from the capacitor, so that any heat produced by the capacitor during motor operation will not change the calibration of the start winding control switch.

## Claims

1. An electric motor control for attachment either to a support wall or to a pressure switch, comprising a terminal base (41), a plurality of quick connect terminals (56—58) fastened to said base (41), and a cover (66) attachable to said base and enclosing said terminals, characterized in that said terminal base (41) has a base portion (42) and a mounting wall portion (43), said terminals (56—58) being mounted on said base portion (42), first and second lead openings (44, 47) formed in said base portion (42) and in said mounting wall portion (43), respectively, and a motor control switch (16) fastened within said cover (66), said switch (16) including a plurality of quick connect terminals (37—39) located to engage said terminals (56—58) of said base (41) when said cover (66) is assembled with said base (41).

2. A control according to Claim 1, characterized in that said swtich (16) comprises a circuit board (26) having said terminals (37—39) of said switch (16) fastened thereto, and further including a bracket (77) fastened to the inside of said cover (66), said board (26) being fastened to said bracket (77).

3. A control according to Claim 2, characterized in that said bracket (77) includes tabs (23) for releasably engaging said board (26) and centering means (80) for locating said board on said bracket.

4. A control according to Claim 2 or 3, characterized in that said switch further comprises a capacitor (36) positioned in one side of said cover (66), said bracket (77) engaging said capacitor (36) and holding said capacitor (36) in said one side.

5. A control according to any one of Claims 1 to 4, characterized in that said mounting wall portion (43) forms a substantially right angle with said base portion (42), and said cover (66) fits snugly around the edges of said mounting wall portion (43) and said base portion (42).

6. A control according to any one of Claims 1 to 5, and further characterized by fastening means (92) extending through said mounting wall portion (43) for securing said mounting wall portion to said supporting structure.

## Patentansprüche

1. Elektrische Motorsteuerung zur Anbringung entweder an einer Halterungswand oder an einem Druckschalter, die umfaßt: eine Endgerätbasis (41), eine Vielzahl von Schnellverbindungsanschlüssen (56—58), die an der Basis (41) befestigt sind, und eine Abdeckung (66), die auf der Basis anbringbar ist und die Anschlüsse umschließt, dadurch gekennzeichnet, daß die Endgerätbasis (41) einen Basisabschnitt (42) und einen Montierwandabschnitt (43) umfaßt, wobei die Anschlüsse (56—58) an dem Basisabschnitt (42) angebracht sind, erste und zweite Leitungsöffnungen (44, 47) in dem Basisabschnitt (42) bzw. in dem Montierwandabschnitt (43) ausgebildet sind und ein Motorsteuerschalter (16) innerhalb der Abdeckung (66) befestigt ist, wobei der Schalter (16) eine Mehrzahl Schnellverbindungsanschlüsse (37—39) umfaßt, die so angeordnet sind, daß sie mit den Anschlüssen (56—58) der Basis (41) in Eingriff stehen, wenn die Abdeckung (66) mit der Basis (41) zusammengesetzt ist.

2. Steuerung nach Anspruch 1, dadurch gekennzeichnet, daß der Schalter (16) eine Schaltungskarte (26) umfaßt, wobei die Anschlüsse (37—39) des Schalters (16) daran befestigt sind und wobei die Karte ferner einen Halter (77) umfaßt, der an der Innenseite der Abdeckung (66) befestigt ist, wobei die Karte (26) an dem Halter (77) befestigt ist.

3. Steuerung nach Anspruch 2, dadurch gekennzeichnet, daß der Halter (77) Vorsprünge (83) aufweist zum lösbaren Ineingriffkommen mit der Karte (26) und Zentriermitteln (80) zum Ausrichten der Karte auf dem Halter.

4. Steuerung nach Anspruch 2 oder 3, dadurch gekennzeichnet, daß der Schalter ferner einen Kondensator (36) aufweist, der auf einer Seite der Abdeckung (66) angeordnet ist, wobei der Halter (77) mit dem Kondensator (36) in Eingriff steht und den Kondensator (36) auf der einen Seite hält.

5. Steuerung nach einem der Ansprüche 1 bis 4, dadurch gekennzeichnet, daß der Montierwandabschnitt (43) einen im wesentlichen rechten Winkel mit dem Basisabschnitt (42) bildet und die Abdeckung (66) die Kanten des Montierwandabschnittes (43) und des Basisabschnittes (42) dicht anliegend umläuft.

6. Steuerung nach einem der Ansprüche 1 bis 5, ferner gekennzeichnet durch Befestigungsmittel (92), die sich durch den Montierwandabschnitt (43) erstrecken, zum Sichern des Montierwandabschnittes an dem Halterungsaufbau.

## Revendications

1. Commande de moteur électrique destinée à être fixée soit à une paroi de support, soit à un commutateur de pression, comprenant une base pour bornes (41), une pluralité de bornes à connexion rapide (56—58), fixées à ladite base (41), et un couvercle (66) qui peut être fixé à ladite base et enfermant lesdites bornes, caractérisée en ce que ladite base (41) présente une partie de base (42) et une partie de paroi de montage (43), lesdites bornes (56—58) étant montées sur ladite partie de base (42), des première et seconde ouvertures pour conducteurs (44, 47) formées dans ladite partie de base (42) et dans ladite partie de paroi de montage (43), respectivement, et un commutateur de commande du moteur (16), fixé dans ledit couvercle (66), ledit commutateur (16) incluant une pluralité de bornes à connexion rapide (37—39) situées pour engager lesdites bornes (56—58) de ladite base (41) quand ledit couvercle (66) est assemblé avec ladite base (41).

2. Commande selon la revendication 1, caractérisée en ce que ledit commutateur (16) comprend une plaquette de circuit (26) où sont fixées lesdites bornes (37—39) dudit commutateur (16), et comportant de plus une patte (77) fixée à l'intérieur dudit couvercle (66), ladite plaquette (26) étant fixée à ladite patte (77).

3. Commande selon la revendication 2, caractérisée en ce que ladite patte (77) comporte des pattes (23) pour engager, de façon amovible, ladite plaquette (26) et des moyens de centrage (80) pour situer ladite plaquette sur ladite patte.

4. Commande selon la revendication 2 ou 3, caractérisée en ce que ledit commutateur comprend de plus un condensateur (36) placé sur un côté dudit couvercle (66), ladite patte (77) engageant ledit condensateur (36) et maintenant ledit condensateur (36) sur ledit côté.

5. Commande selon l'une quelconque des revendications 1 à 4, caractérisée en ce que ladite partie de paroi de montage (43) forme un angle sensiblement droit avec ladite partie de base (42), et ledit couvercle (66) s'adapte étroitement autour des bords de ladite partie de paroi de montage (43) et de ladite partie de base (42).

6. Commande selon l'une quelconque des revendications 1 à 5, et caractérisée de plus par des moyens de fixation (92) s'étendant à travers ladite partie de paroi de montage (43) pour fixer ladite partie de paroi de montage à ladite structure de support.

FIG-4

FIG-1

CONTROL
SWITCH

PRESSURE
SWITCH

FIG-3

FIG-2

_FIG_ 5_

66

41

67

17

97

98  13  44

59

58

98

57

56

60

48

98  42  45

43

94
93
19
18

14

17

_FIG_ 6_

97

101  43  101

91
103
103

_FIG_ 7_

19

107

13  14  18

2